# EUROPEAN PATENT SPECIFICATION

(11) **EP 2 105 394 B1**
(45) Date of publication and mention of the grant of the patent: **22.02.2012**
(21) Application number: 09075116.5
(22) Date of filing: 16.03.2009
(51) Int. Cl.: B65G 47/96

(54) **Method for sorting products as well as a sorting device**
Verfahren zur Sortierung von Produkten sowie Sortiervorrichtung
Procédé de tri de produits ainsi que dispositif de tri

(30) Priority: 26.03.2008 NL 1035207
(43) Date of publication of application: 30.09.2009
(73) Proprietor: Vanderlande Industries B.V., 5466 RB Veghel (NL)
(72) Inventor: van Vught, Gregorius Maria Adrianus, 5627 CM Eindhoven (NL)
(74) Representative: Dorna, Peter

(56) References cited:
- EP-A- 0 768 252
- NL-C2- 1 022 682

## Description

The present invention relates to a method for sorting products, using a sorting device comprising successive load carrying platforms arranged a pitch distance apart, which are movable in a conveying direction and which are each tiltable about a tilt axis extending parallel to the conveying direction, comprising the steps of
A supplying a product to be sorted to the sorting device, such that the product to be sorted is supported on at least three successive load carrying platforms,
B tilting said at least three successive load carrying platforms at a sorting location, so that the products to be sorted will move off the load carrying platforms at the sorting location.

Such a device is known from Dutch patent NL1022682 published as EP-A-1447359 which discloses the preamble of claim 1. Said patent discloses a sorting device of the so-called tilting tray type, which comprises a train of trolleys, each trolley supporting a load carrying platform. Each load carrying platform is tiltable about a tilt axis extending parallel to the conveying direction. Sorting locations are provided along the path of the train, where a product to be sorted, which is supported by the load carrying platform, can be moved off the load carrying platform under the influence of the force of gravity as a result of the tilting of the load carrying platform. If a product to be sorted is not supported on one load carrying platform but on at least two adjoining load carrying platforms, it is suggested in the aforesaid publication to have the tilting of the load carrying platforms at a sorting location take place simultaneously. Normally, the orientation of the product to be sorted will not change while the product is moving off the supporting platforms: the longitudinal direction of the product will remain oriented parallel to the conveying direction. A significant drawback of such a method of sorting is that each sorting location takes up a comparative great deal of length of the conveying path. For that reason it is also known to use sorting locations where a product to be sorted is diverted sideways through 90° at the sorting location. When such a diversion is used, the simultaneous tilting according to the prior art of all the load carrying platforms supporting a product to be sorted at a sorting location involves the risk of the product to be sorted getting jammed in the discharge conveyor at the sorting location, which discharge conveyor may be a chute, for example. The object of the present invention is to provide a method which makes it possible to sort out comparatively long products to be sorted, which are supported on at least three successive load carrying platforms, within a limited length of the conveying path of the sorting device, in particular when diverting a product at a sorting location. In order to accomplish that object, the method according to the invention is characterised by the successive steps, in realising step B, of
B1 tilting the front two load carrying platforms at least substantially simultaneously;
B2 tilting the load carrying platform located directly behind the front two load carrying platforms; according to claim 1.
Surprisingly, it has been found that when the front two load carrying platforms are tilted first and the load carrying platform located directly behind the front two load carrying platforms are only tilted at a later stage, the longitudinal direction of the product to be sorted will take up a changed orientation in preparation of the eventually desired diversion at the sorting location while still present on the load carrying platforms. As a result, the delivery of the products to be sorted by the sorting device at the sorting location can take place smoothly and with a very limited risk of blockages. The words "at least substantially" in the aforesaid step B1 are to be understood to mean the situation in which front two load carrying platforms either tilt exactly simultaneously or with a maximum interval of half the length of time the load carrying platforms need to move a pitch distance.

In particular when sorting products which just fit within the length provided by said at least three successive load carrying platforms between the front edge of the front load carrying platform and the rear edge of the rear load carrying platform, or at least when sorting products whose front side is located relatively close to the front edge of the front load carrying platform, tilting of the load carrying platform located directly in front of the front two load carrying platforms preferably takes place prior to or simultaneously with the tilting of the front two load carrying platforms according to step B1. The load carrying platform located directly in front of the front two load carrying platforms cannot stand in the way of the product to be sorted moving off said at least three successive load carrying platforms. Within the framework of the present invention it is conceivable in that regard for the tilting of the load carrying platform located directly in front of the front two load carrying platforms to take place in dependence on the extent to which the front side of the product to be sorted is located near the front edge of the front two load carrying platforms, or that it is arranged as standard that tilting of the load carrying platform located directly in front of the front two load carrying platforms is to take place prior to or simultaneously with the tilting of the front two load carrying platforms according to step B1. In the latter case, the load carrying platform located directly in front of the front two load carrying platforms is in principle not available for supporting another product to be sorted as long as the product to be sorted that is present on said at least three successive load carrying platforms has not been sorted out at the sorting location.

For sorting products having a length such that the product is supported by three successive load carrying platforms, it is preferable if tilting of the load carrying platform located directly behind the front two load carrying platforms in step B2 takes place at a location downstream of the position where tilting of the front load carrying platform of the front two load carrying platforms took place in step B1, preferably at a position about half a pitch distance downstream of the position where tilting of the front load carrying platform of the front two load carrying platforms took place in step B1. As a result of the tilting of the front two load carrying platforms, the product undergoes a rotation, such that the front side thereof rotates in the direction of the side of the sorting device where the chute is located. The tilting of the load carrying platform located directly behind the front two load carrying platforms at the aforesaid position causes the product to slide off the sorting device into the chute in an advantageous orientation thereof.

When sorting products having a length such that the product to be sorted is supported on at least four successive load carrying platforms, it is furthermore preferable if the rear load carrying platform of said at least four successive load carrying platforms does not tilt in step B. The fact that the rear load carrying platform does not tilt contributes to the rotation of the relatively long product, such that said product slides into the chute in an advantageous orientation. In this way the product is prevented from sliding off in an orientation substantially parallel to the sorting device and getting jammed in the chute.

When sorting products having such a length, it is furthermore preferable if tilting of the load carrying platform located directly in front of the rear load carrying platform in step B2 takes place at the position where tilting of the front load carrying platform of the front two load carrying platforms took place in step B1, or at least at a position at most half a pitch distance removed therefrom. This action also has an advantageous effect on the eventual orientation of the product when said product slides off the sorting device into the chute.

The advantages of the present invention are obtained in particular if, according to another preferred embodiment, the load carrying platforms move in the conveying direction at a velocity of 1.5 - 2.5 metres per second.

The present invention also relates to a sorting device for use in a method according according to claim 7.

The invention will be explained in more detail hereinafter by means of a description of a number of preferred embodiments of devices according to the invention, in which reference is made to the following schematic figures:
Figures 1a-1d are top plan views of four successive situations according to a first preferred embodiment of the invention during the sorting out of a product supported on three successive load carrying platforms;
Figure 2 is a view along the line II-II in figure 1d;
Figures 3a-3d are top plan views of four successive situations according to a second preferred embodiment of the invention during the sorting out of a product supported on three successive load carrying platforms;
Figures 4a-4d are top plan views of four successive situations according to a third preferred embodiment of the invention during the sorting out of a product supported on four successive load carrying platforms;
Figures 5a-5e are top plan views of five successive situations according to a fourth preferred embodiment of the invention during the sorting out of a product supported on five successive load carrying platforms;
Figures 6a shows on a horizontal time scale the simultaneous tilting of load carrying platforms as used in the prior art;
Figures 6b-6e show on a horizontal time scale the tilting of load carrying platforms according to the first, second, third and fourth embodiment, respectively, of the invention.

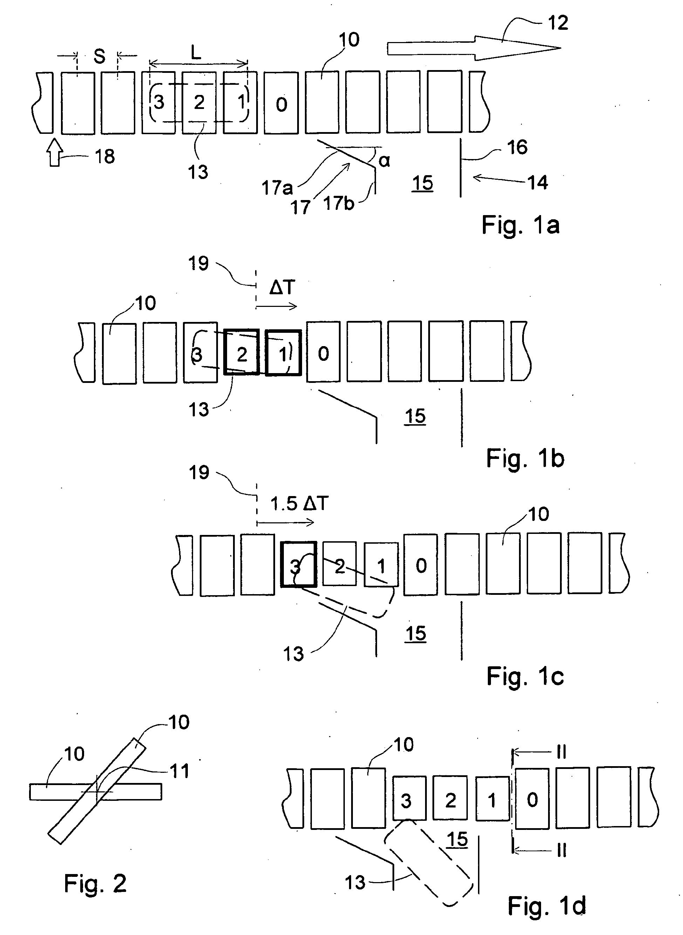

Figure 1a shows in top plan view a number of successive load carrying platforms 10 in a rectilinear part of a conveying path of a sorting device, along which path the load carrying platforms 10 forming part of the sorting device are moved. The sorting device is of the so-called tilting tray type, which is sufficiently well known to those skilled in the art. For a more detailed description of such a sorting device, reference is made to, for example, NL 1022682 published as EP-A-1447359 or WO A1 007/71446. Such sorting devices comprise a train of trolleys, which each support a load carrying platform 10, each of which load carrying platforms 10 is tiltable about a tilt axis 11 (see also figure 2) with respect to the associated trolley, which tilt axis extends parallel to the conveying direction 12. Each trolley is provided with drive means, such as an electric motor. Activation of said drive means causes the load carrying platform to tilt forward or backward.

Although the load carrying platforms 10 are spaced some distance apart in figure 1 a, it is preferable within the framework of the present invention for the load carrying platforms 10 to abut against one another, thus forming a joint, continuous supporting surface, as it were. The load carrying platforms are in practice composed of a number of parts which are movable with respect to each other, so that the outer circumference of the compound load carrying platforms can change as the load carrying platforms pass through bends, without the continuous nature of the joint supporting surface formed by the successive load carrying platforms 10 being lost. The load carrying platforms are spaced a pitch distance S apart.

A product 13 to be sorted is supported on three successive load carrying platforms, which are numbered 1, 2 and 3 in figures 1a-1d. The length L of the product 13 ranges between 2S and 3S. The product 13 is to be sorted out at the sorting location 14, where a chute 15 is provided. The chute 15 is provided with upright edges 16, 17. At the location where the upright edge 17 joins the sorting device, it is oriented at an angle α of about 30° relative to the conveying direction 12, whilst beyond the part 17a the upright edge 17 (indicated at 17b) is oriented perpendicular to the conveying direction 12, just like the upright edge 16.

Provided along the conveying path of the sorting device, upstream of the chute 15, for example at the position shown in figure 1a, is a signal generator 18, which wirelessly transfers control signals to passing drive means for the load carrying platforms 10. A control system (not shown) groups those load carrying platforms 10 which are relevant for the sorting out of the product 13 and causes the load carrying platforms 10 in question to function/tilt in an interrelated manner. In the present case, the load carrying platforms 1, 2 and 3 are concerned, but also the load carrying platform 0, which is provided in front of the load carrying platforms 1, 2 and 3. The signal generator 18 delivers a control signal to the drive means associated with the load carrying platforms 0 - 3 the moment the load carrying platform in question passes the signal generator 18. By means of this control signal the load carrying platform in question is instructed when to complete its tilting action relative to a fixed point, which is for example at the location indicated by the dashed line 19. Depending on, for example, the speed at which the platforms pass the chute, said fixed point is located further or less far upstream of the chute along the sorting device.

For the embodiment that is shown in figures 1a-1d, said control signal implies that tilting of the load carrying platform 0 is not necessary, that tilting of the load carrying platform 1 must be complete precisely after a period ΔT from the moment of passing the fixed point, that tilting of the load carrying platform 2 must be complete precisely upon passing the fixed point (figure 1b) and that the load carrying platform 3 must complete its tilting action 1.5 ΔT after passing the fixed point (figure 1c). In the various figures, thicker lines indicate those load carrying platforms 10 which complete their tilting action at the point in time indicated in the figure. ΔT is in this context defined as the space of time required for moving the sorting device a pitch distance S in the conveying direction 12. Consequently, tilting of the load carrying platforms 1 and 2 takes place simultaneously in this embodiment, as is shown in figure 1 b.

As a result of said simultaneous tilting of the load carrying platforms 1, 2, the orientation of the product 13 will change slightly, without the product moving completely off the load carrying platforms 1, 2 (and 3) in sideways direction. This will not happen until the moment when tilting of the load carrying platform 3 takes place as well (figure 1c). Upon sliding off the load carrying platforms, the product 13 is oriented with its longitudinal direction at least substantially parallel to the oblique part 17a of the upright edge 17 . Subsequently, the product 13 will be diverted downstream of the oblique part 17a (figure 1d) to an orientation perpendicular to the conveying direction 12 under the influence of the force of gravity and as a result of being guided by the upright edges 16, 17.

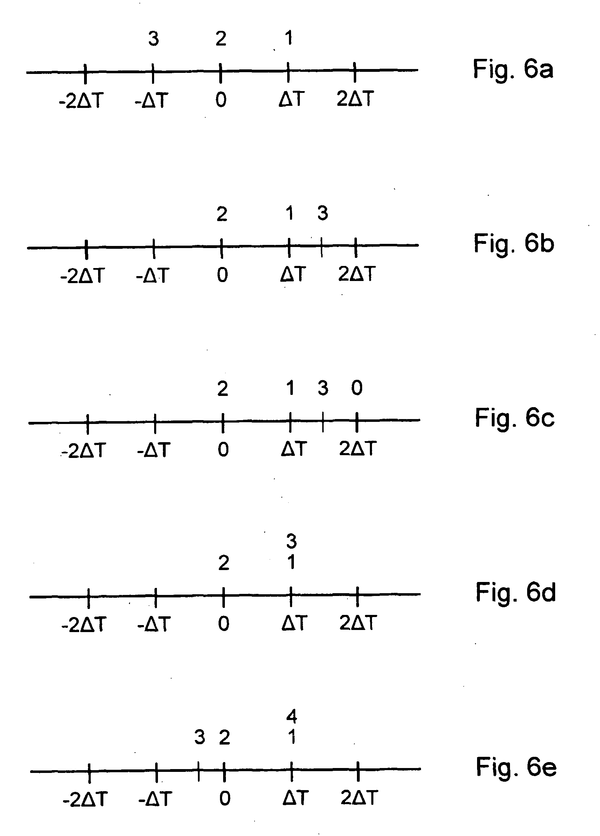

In figure 6b the above-described method is represented differently, viz. on a horizontal timescale. In said figure, the relative tilting moment of a load carrying platform is shown in relation to the moment the load carrying platform in question passes the fixed point. The load carrying platform 2 thus completes its tilting action upon passing the fixed point (point in time 0), whilst the load carrying platform 1 completes its tilting action ΔT after passing the fixed point. Since the speed S per ΔT is high, this means that the load carrying platforms 1 and 2 will tilt simultaneously. The load carrying platform 3 will complete its tilting action, as indicated, 1.5 ΔT after passing the fixed point.

Figures 6a is included by way of comparison and shows the simultaneous tilting as takes place in the prior art. As shown in the figure, tilting of the load carrying platform 1 takes place with a delay ΔT, whilst tilting of the load carrying platform 3, on the contrary, takes place ΔT sooner, the result being simultaneous tilting of the load carrying platforms 1, 2 and 3.

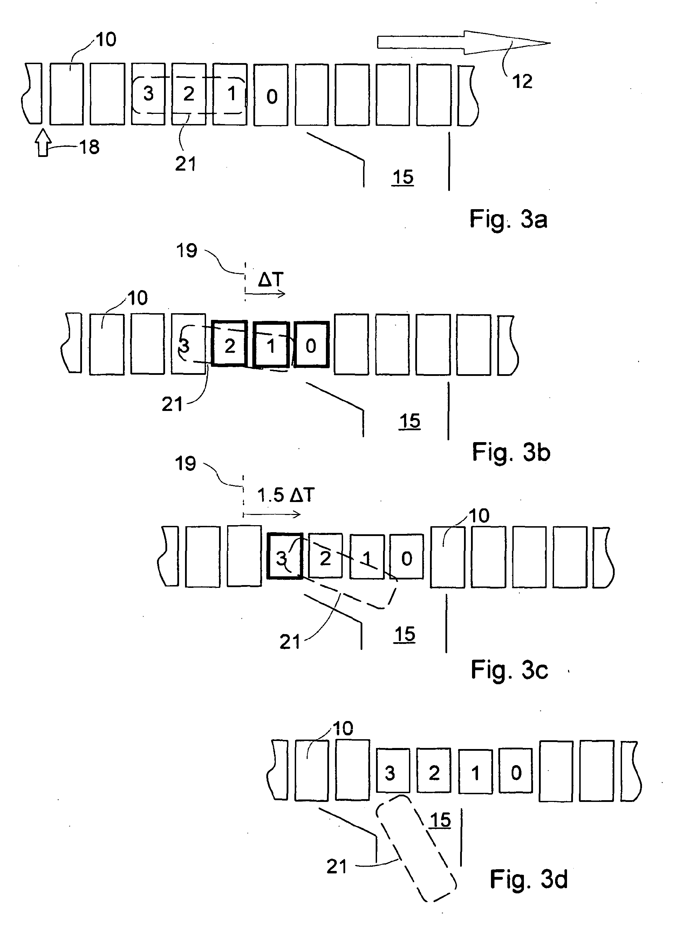

Like figures 1a-1d, figures 3a-3d relate to the situation in which a product 21 to be sorted is so dimensioned that it fits on three load carrying platforms 10 in the longitudinal direction thereof. In the situation shown in figures 3a-3d, however, the product barely fits on said platforms. Using the method as explained with reference to figures 1a-1d involves the risk of the front side of the products 21 coming to abut against the upright side of the load carrying platform 0 during tilting of the load carrying platforms 1, 2 and thus of rotation of the products 21 on the load carrying platforms. This might result in the desired oblique position of the products 21 after tilting of the load carrying platforms 1, 2 not being reached. To eliminate this risk, the method as depicted in figures 3a-3d is different from the method shown in figures 1a-1d in that, as shown in figure 3b, not only the load carrying platforms 1, 2 tilt simultaneously but, along with the load carrying platforms 1, 2, also the load carrying platform 0 located in front thereof, in which case tilting of the load carrying platform 0 must be complete 2 ΔT after said load carrying platform 0 passed the fixed point. Tilting of the rear load carrying platform 3 is completed at a location downstream of the position where previously tilting of the load carrying platform 1 took place (figure 3c) or, in other words, the indicated period 1.5 ΔT after passing the fixed point.

In figure 6c the above-discussed embodiment is shown on a horizontal time scale. The process is comparable to the process shown in figure 6b, with the addition that the load carrying platform 0 also takes part in the tilting process. Since tilting of the load carrying platform 0 takes place with a delay of 2 ΔT, said load carrying platform 0 will tilt simultaneously with the load carrying platforms 1 and 2.

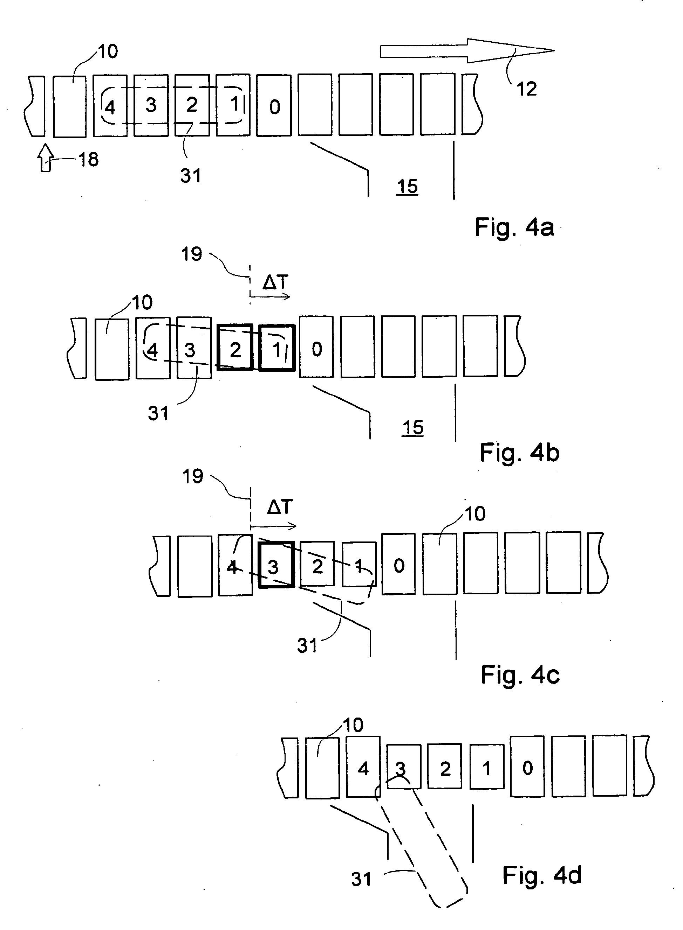

The product 31 in figures 4a-4d is dimensioned so that it is supported by four successive load carrying platforms 10. As in the above-discussed preferred embodiments of the method according to the invention, the front two load carrying platforms 1, 2 are the first to tilt (see figure 4b), as a result of which the product 31 already takes up a slightly oblique orientation on the four successive load carrying platforms 1-4. Load carrying platform 3 tilts at the same position where the load carrying platform 1 tilts, or, in other words, a period ΔT after passing the fixed point, so that the product 31 will take up an even more oblique position on the load carrying platforms 1-4 and the product 31 will actually start to slide off the load carrying platforms 1-4 (figure 4c). What is conspicuous is the fact that the load carrying platform 4, being the rearmost of the four successive load carrying platforms that initially support the product 31, does not tilt for sorting out the product 31 at the location of the chute 15.

In figure 6d this process is shown on a horizontal time scale, in which, as described in the foregoing, the simultaneous tilting of the load carrying platforms 1 and 2 and the tilting of the load carrying platform 3 after a delay period ΔT is shown.

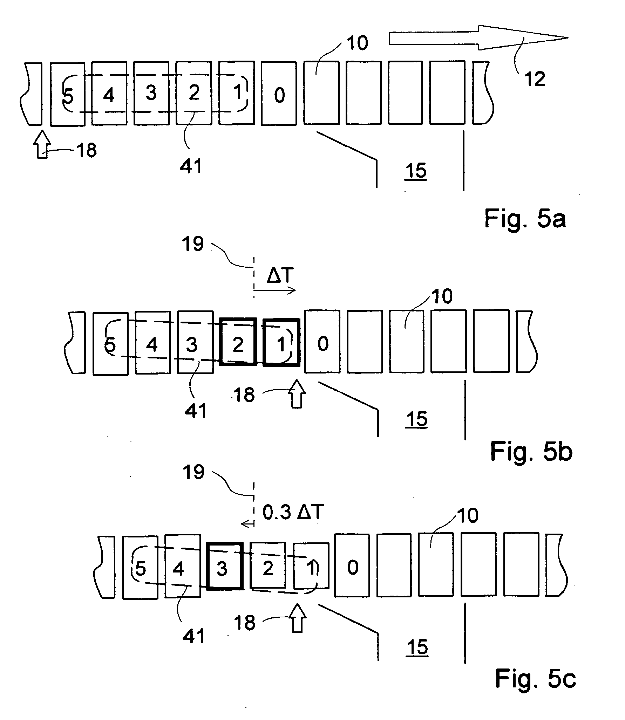

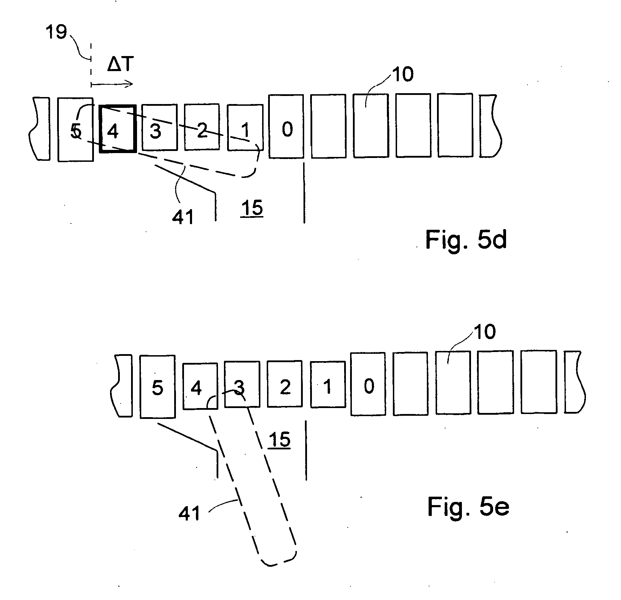

Figures 5a-5e, to conclude, relate to the situation in which the product 41 has a length such that it is supported by five successive load carrying platforms 10 (numbered 1-5). With a view to sorting out products having such a length at the location of the chute 15, it has been found to be advantageous to tilt the front two load carrying platforms 1, 2 first (figure 5b), as in the preceding preferred embodiment. As a result, the product 41 will take up a slightly oblique position on the load carrying platforms 1-5. Relatively shortly afterwards, the load carrying platform 3 has tilted, viz. 0.3 AT before passing the fixed point, as a result of which the obliqueness is further increased and the product 41 already moves slightly sideways (figure 5c). It is the tilting of the load carrying platform that initiates the process of actually moving the product 41 off the five successive load carrying platforms 1-5. The load carrying platform 4 completes the tilting process at the same position where tilting of the load carrying platform 1 took place before (figure 5d) or, in other words, ΔT after passing the fixed point. As in the preferred embodiment shown in figures 4a-4d, the rearmost load carrying platform, in this case the load carrying platform 5, does not tilt. See figure 6e for a representation of this process on a horizontal time scale.

## Claims

1. A method for sorting products, using a sorting device comprising successive load carrying platforms (10) arranged a pitch distance (5) apart, which are movable in a conveying direction (12) and which are each tiltable about a tilt axis (11) extending parallel to the conveying direction (12), comprising the steps of
A supplying a product to be sorted (13,21) to the sorting device, such that the product to be sorted is supported on at least three successive load carrying platforms, (1,2,3)
B tilting said at least three successive load carrying platforms at a sorting location (14), so that the products to be sorted will move off the load carrying platforms at the sorting location,
**characterised by** the successive steps, in realising step B,
B1 tilting the front two load carrying platforms (1,2) at least substantially simultaneously;
B2 tilting the load carrying platform (3) located directly behind the front two load carrying platforms.

2. A method according to claim 1, **characterised by** tilting the load carrying platform (o) located directly in front of the front two load carrying platforms prior to or simultaneously with step B1.

3. A method according to claim 1 or 2, **characterised by** supplying a product to be sorted to the sorting device in step A, such that the product to be sorted is supported on three successive load carrying platforms, whilst in step B tilting of the load carrying platform located directly behind the front two load carrying platforms takes place at a location downstream of the position where tilting of the front load carrying platform of the front two load carrying platforms took place in step B1.

4. A method according to claim 1 or 2, **characterised by** supplying a product to be sorted to the sorting device in step A, such that the product to be sorted is supported on at least four successive load carrying platforms, whilst the rear load carrying platform of said at least four successive load carrying platforms does not tilt in step B.

5. A method according to claim 4, **characterised by** tilting the load carrying platform located directly in front of the rear load carrying platform in step B2 at the position where tilting of the front load carrying platform of the front two load carrying platforms took place in step B1, or at least at a position at most half a pitch distance removed therefrom.

6. A method according to any one of the preceding claims, **characterised in that** the load carrying platforms move in the conveying direction at a velocity of 1.5 - 2.5 metres per second.

7. A sorting device for use with a method according to any one of the preceding claims, comprising successive load carrying platforms (10) arranged a pitch distance apart (5), which are movable in a conveying direction and which are each tiltable about a tilt axis (11) extending parallel to the conveying direction (12), which sorting device comprises control means arranged for controlling, in dependence on the length of the product to be sorted, seen in the conveying direction, the at least three successive load carrying platforms on which a product to be sorted is supported, for carrying out the steps of the method according to any one of the preceding claims.

## Patentansprüche

1. Verfahren zum Sortieren von Produkten unter Verwendung einer Sortiervorrichtung, die aufeinanderfolgende, unter einem Rasterabstand (S) beabstandet angeordnete, lasttragende Plattformen (10) umfasst, die in einer Beförderungsrichtung (12) bewegbar sind und jeweils um eine zur Beförderungsrichtung (12) parallel verlaufende Kippachse (11) kippbar sind, folgende Schritte umfassend:
A Zuführen eines zu sortierenden Produkts (13, 21) zu der Sortiervorrichtung derart, dass das zu sortierende Produkt auf mindestens drei aufeinanderfolgenden lasttragenden Plattformen (1, 2, 3) aufliegt,
B Kippen der mindestens drei aufeinanderfolgenden lasttragenden Plattformen an einer Sortierstelle (14), so dass die zu sortierenden Produkte die lasttragenden Plattformen an der Sortierstelle verlassen,
**gekennzeichnet durch** die folgenden aufeinanderfolgenden Schritte bei Ausführung von Schritt B:
B1 Kippen der vorderen zwei lasttragenden Plattformen (1, 2) zumindest im Wesentlichen gleichzeitig;
B2 Kippen der lasttragenden Plattform (3), die sich unmittelbar hinter den vorderen zwei lasttragenden Plattformen befindet.

2. Verfahren nach Anspruch 1, **gekennzeichnet durch** Kippen der lasttragenden Plattform (0), die sich unmittelbar vor den vorderen zwei lasttragenden Plattformen befindet, vor oder gleichzeitig mit Schritt B1.

3. Verfahren nach Anspruch 1 oder 2, **gekennzeichnet durch** Zuführen eines zu sortierenden Produkts zur Sortiervorrichtung in Schritt A derart, dass das zu sortierende Produkt auf drei aufeinanderfolgenden lasttragenden Plattformen aufliegt, während in Schritt B das Kippen der lasttragenden Plattform, die sich unmittelbar hinter den vorderen zwei lasttragenden Plattformen befindet, an einer Stelle stromabwärts der Position stattfindet, an der das Kippen der vorderen lasttragenden Plattform der vorderen zwei lasttragenden Plattformen in Schritt B1 stattfand.

4. Verfahren nach Anspruch 1 oder 2, **gekennzeichnet durch** Zuführen eines zu sortierenden Produkts zur Sortiervorrichtung in Schritt A derart, dass das zu sortierende Produkt auf mindestens vier aufeinanderfolgenden lasttragenden Plattformen aufliegt, während die hintere lasttragende Plattform der mindestens vier aufeinanderfolgenden lasttragenden Plattformen in Schritt B nicht kippt.

5. Verfahren nach Anspruch 4, **gekennzeichnet durch** Kippen der lasttragenden Plattform, die sich unmittelbar vor der hinteren lasttragenden Plattform befindet, in Schritt B2 an der Position, an der das Kippen der vorderen lasttragenden Plattform der vorderen zwei lasttragenden Plattformen in Schritt B1 stattfand, oder zumindest an einer Position, die höchstens um einen halben Rasterabstand davon entfernt ist.

6. Verfahren nach einem der vorhergehenden Ansprüche, **dadurch gekennzeichnet, dass** sich die lasttragenden Plattformen in der Beförderungsrichtung mit einer Geschwindigkeit von 1,5 bis 2,5 Meter pro Sekunde bewegen.

7. Sortiervorrichtung zur Verwendung bei einem Verfahren nach einem der vorhergehenden Ansprüche mit aufeinanderfolgenden lasttragenden Plattformen (10), die in einem Rasterabstand (S) beabstandet angeordnet, in einer Beförderungsrichtung bewegbar und jeweils um eine zur Beförderungsrichtung (12) parallel verlaufende Kippachse (11) kippbar sind, wobei die Sortiervorrichtung eine Steuerungseinrichtung umfasst, die dazu eingerichtet ist, in Abhängigkeit von der Länge des zu sortierenden Produkts, in Beförderungsrichtung gesehen, die mindestens drei aufeinanderfolgenden lasttragenden Plattformen zu steuern, auf denen ein zu sortierendes Produkt aufliegt, um die Schritte des Verfahrens nach einem der vorhergehenden Ansprüche auszuführen.

## Revendications

1. Procédé de triage de produits, utilisant un dispositif de triage comprenant des plates-formes porteuses successives (10) séparées d'une distance de pas (5), qui sont mobiles dans une direction de transport (12) et qui sont chacune inclinables autour d'un axe d'inclinaison (11) s'étendant parallèlement à la direction de transport (12), comprenant les étapes consistant à
A. fournir un produit à trier (13, 21) au dispositif de triage, de telle sorte que le produit à trier est supporté sur au moins trois plates-formes porteuses successives (1, 2, 3),
B. incliner lesdites au moins trois plates-formes porteuses successives en un emplacement de triage (14), de sorte que les produits à trier s'éloigneront des plates-formes porteuses au niveau de l'emplacement de triage,
**caractérisé par** les étapes successives, dans la réalisation de l'étape B, consistant à
B1. incliner les deux plates-formes porteuses avant (1, 2) au moins sensiblement simultanément ;
B2. incliner la plate-forme porteuse (3) située directement derrière les deux plates-formes porteuses avant.

2. Procédé selon la revendication 1, **caractérisé par** l'étape consistant à incliner la plate-forme porteuse (0) située directement en face des deux plates-formes porteuses avant préalablement à ou simultanément à l'étape B1.

3. Procédé selon la revendication 1 ou 2, **caractérisé par** l'étape consistant à fournir un produit à trier au dispositif de triage dans l'étape A, de telle sorte que le produit à trier soit supporté sur trois plates-formes porteuses successives, pendant que dans l'étape B, l'inclinaison de la plate-forme porteuse située directement derrière les deux plates-formes porteuses avant a lieu à un emplacement en aval de la position où l'inclinaison de la plate-forme porteuse avant des deux plates-formes porteuses avant a eu lieu dans l'étape B1.

4. Procédé selon la revendication 1 ou 2, **caractérisé par** l'étape consistant à fournir un produit à trier au dispositif de triage dans l'étape A, de telle sorte que le produit à trier soit supporté sur au moins quatre plates-formes porteuses successives, pendant que la plate-forme porteuse arrière desdites au moins quatre plates-formes porteuses successives ne s'incline pas dans l'étape B.

5. Procédé selon la revendication 4, **caractérisé par** l'étape consistant à incliner la plate-forme porteuse située directement en face de la plate-forme porteuse arrière dans l'étape B2 à la position où l'inclinaison de la plate-forme porteuse avant des deux plates-formes porteuses avant a lieu dans l'étape B1, ou au moins en une position qui en est éloignée au plus à mi-distance de pas.

6. Procédé selon l'une quelconque des revendications précédentes, **caractérisé en ce que** les plates-formes porteuses se déplacent dans la direction de transport à une vitesse de 1,5 à 2,5 mètres par seconde.

7. Dispositif de triage à utiliser avec un procédé selon l'une quelconque des revendications précédentes, comprenant des plates-formes porteuses successives (10) séparées d'une distance de pas (5), qui sont mobiles dans une direction de transport et qui sont chacune inclinables autour d'un axe d'inclinaison (11) s'étendant parallèlement à la direction de transport (12), lequel dispositif de triage comprend un moyen de commande agencé pour commander, dépendamment de la longueur du produit à trier, vu dans la direction de transport, les au moins trois plates-formes porteuses successives sur lesquelles un produit à trier est supporté, pour réaliser les étapes du procédé selon l'une quelconque des revendications précédentes.
